# EUROPÄISCHE PATENTANMELDUNG

(11) **EP 2 949 787 A2**
(43) Veröffentlichungstag der Anmeldung: **02.12.2015**
(21) Anmeldenummer: 15168997.3
(22) Anmeldetag: 22.05.2015
(51) Int. Cl.: C25D 17/00, C25D 5/02, C25D 5/16, C25D 5/18, C25D 5/36, C25D 17/12

(54) **VERFAHREN UND ANLAGE ZUM HERSTELLEN EINES GEHÄRTETEN FORMTEILS**

(30) Priorität: 26.05.2014 DE 102014210008
(71) Anmelder: Muhr und Bender KG, 57439 Attendorn (DE)
(72) Erfinder: Muhr, Thomas, 57439 Attendorn (DE); Brecht, Jörg Dieter, 57462 Olpe (DE); Schneider, Christoph, 57368 Lennestadt-Elspe (DE); Beiter, Philip, 51429 Bergisch-Gladbach (DE)
(74) Vertreter: Neumann Müller Oberwalleney & Partner Patentanwälte

(57) **Zusammenfassung**

Die Erfindung betrifft ein Verfahren zum Herstellen eines gehärteten Formteils mit den Schritten: Erzeugen einer Platine 16 aus härtbarem Bandmaterial 11; Erhitzen der Platine 16 auf Austenitisierungstemperatur; Umformen und Härten der Platine zu einem gehärteten Formteil 16; Reinigen des gehärteten Formteils 16; Beschichten des gehärteten Formteils 16 mit einer metallischen Beschichtung in einem Tauchbad 21 mit einer Elektrolytlösung, wobei während des Beschichtens zumindest ein Hilfselement 22 in dem Tauchbad verwendet wird, derart, dass der Aufbau der Beschichtung partiell beeinflusst wird. Die Erfindung betrifft ferner eine Anlage zum Herstellen eines gehärteten Formteils.

## Beschreibung

Die Erfindung betrifft ein Verfahren und eine Anlage zum Herstellen von gehärteten und beschichteten Formteilen aus gewalztem Bandmaterial. Durch die Beschichtung soll das Formteil vor Korrosion geschützt werden. Die Erfindung betrifft ferner ein solches Formteil als Strukturbauteil mit einem aufgebrachten Korrosionsschutzsystem, insbesondere als Karosseriebauteil für ein Kraftfahrzeug.

Aus der DE 10 2004 037 206 A1 ist eine Karosserie für ein Kraftfahrzeug bekannt, die aus Einzelelementen gefügt ist. Hierfür werden Einzelelemente aus flexibel gewalztem Blech mit längs einer Richtung variabler Blechdicke eingesetzt, bei denen die Verteilungsbreite der spezifischen Belastung über dem Einzelelement durch die Wahl der Blechdickenverteilung reduziert ist. Derartige Blechelemente mit variabler Blechdicke werden auch als Tailor Rolled Blanks (TRB) bezeichnet.

Die in der Kraftfahrzeugindustrie vorliegenden Bestrebungen in Richtung Leichtbau und Insassenschutz führen zu einem vermehrten Einsatz von hoch- und höchstfesten Karosseriestählen. Im Zuge dieser Entwicklung werden insbesondere Mehrphasenstähle und Martensitphasenstähle eingesetzt. Letztere Stähle werden im Allgemeinen über ein indirektes oder direktes Warmumformverfahren zu Strukturbauteilen verarbeitet.

Üblicherweise werden Strukturbauteile für Kraftfahrzeuge mit einer Beschichtung versehen, welche das Stahlblech vor Korrosion schützen soll. Dabei gestaltet sich die Realisierung eines zuverlässigen Korrosionsschutzes gerade bei warmumgeformten Stahlwerkstoffen als schwierig. Es sind diverse Beschichtungen und Beschichtungsverfahren bekannt, die sich unter anderen dadurch unterscheiden, ob die Beschichtung vor oder nach dem Warmumformen aufgebracht wird.

Ein Verfahren zur Beschichtung von Stahlbauteilen ist beispielsweise das galvanische (elektrolytische) Verzinken. Beim galvanischen Verzinken werden die Werkstücke in einen Zinkelektrolyten eingetaucht. Beschichtungen aus Zink wirken aufgrund ihres gegenüber dem Werkstück unedleren Charakters als "Opferanoden". Das verzinkte Grundmaterial wirkt als Kathode, weswegen die Beschichtung auch als kathodischer Korrosionsschutz bezeichnet wird.

Aus der EP 2 412 848 A1 ist ein Verfahren zum Herstellen eines mit einer Korrosionsschutzbeschichtung versehenen Blechformteils bekannt. Hierfür wird zunächst ein Blechmaterial zum Blechformteil umgeformt und gehärtet. Anschließend wird auf das gehärtete Blechformteil eine Zink-Nickel-Beschichtung als Korrosionsschutzbeschichtung aufgebracht. Dabei wird zu Beginn des Beschichtungsvorgangs zunächst eine dünne Nickelschicht abgeschieden, die im Weiteren eine Wasserstoffversprödung des Stahlblechmaterials verhindern soll.

Problematisch bei den großserientechnisch umgesetzten Beschichtungsverfahren für höchstfeste Strukturbauteile ist, dass der Korrosionsschutz von vor dem Warmformen aufgebrachten Beschichtungen durch die vor und beim Warmformen auf das Beschichtungssystem einwirkende Temperatur sowie den Umformschritt selbst die Eigenschaften des Bauteils und der Beschichtung nachteilig verändern. Es kann zu Lotrissigkeit und Mikrorissen in der Beschichtung beziehungsweise dem beschichteten Bauteil kommen, was einen negativen Einfluss auf das beschichtete Bauteil und dessen Korrosionsverhalten zur Folge hat. Beschichtungssysteme und Verfahren wie Flammspritzen und Sheradisieren die nach dem Warmformen aufgebracht werden, weisen den großen Nachteil auf, dass die Schichtdicke große Schwankungen aufweist und die Verfahren insgesamt sehr aufwändig sind.

Aus der Veröffentlichung "Hochgeschwindigkeitsverzinkung (HGV) geometrisch komplexer Bauteile" von der Fakultät für Maschinenbau der Universität Stuttgart, von Christoph Janisch, ist bekannt, dass die Stromdichte beim elektrolytischen Beschichten durch zusätzlich angebrachte Anoden lokal erhöht werden kann.

Aus der DE 17 71 953 B ist eine Vorrichtung zur Elektrobeschichtung von innen und außen zu beschichtenden Hohlkörpern in einem das Beschichtungsmaterial enthaltenden elektrisch leitenden Bad bekannt. In der Vorrichtung ist je Hohlraum des Hohlkörpers zumindest ein als Dipol wirkendes Element vorgesehen ist, das teilweise in den Hohlraum und teilweise in den Raum außerhalb des Hohlraums ragt. Der äußere Teil des Dipols verhält sich als Anode, während der innere Teil des Dipols als Kathode wirkt. Es erfolgt somit die Beschichtung der gesamten Oberfläche des Hohlkörpers sowie des äußeren Teils des Dipols.

Aus der DE 957 614 B ist ein Verfahren zum galvanischen Abscheiden von Metallschichten auf Gegenstände mittels Gleichstrom bekannt. Zwischen dem Gegenstand und der Anode ist eine Hilfselektrode angeordnet, die den Gegenstand teilweise gegenüber der Anode abschirmt. Die Hilfselektrode und der Gegenstand bewegen sich relativ zueinander, so dass die Hilfselektrode über die gesamte Oberfläche des Gegenstands wandert und der jeweils von der Anode abgeschirmte Teil des Gegenstands ständig wechselt. So erfolgt das Beschichten unter periodischer Änderung der Polarität, so dass auf der gesamten Oberfläche ein Metallniederschlag mit größerer Güte als bei Spannung mit konstanter Polarität entsteht.

Der vorliegenden Erfindung liegt die Aufgabe zugrunde, ein Verfahren zum Herstellen eines gehärteten Formteils vorzuschlagen, das einen besonders guten Korrosionsschutz bietet. Die Aufgabe besteht ferner darin, eine entsprechende Anlage zum Herstellen eines gehärteten Formteils mit guten Korrosionseigenschaften sowie ein entsprechend hergestelltes Bauteil vorzuschlagen.

Eine Lösung besteht in einem Verfahren zum Herstellen eines gehärteten Formteils mit den Schritten: Erzeugen einer Platine aus härtbarem Bandmaterial; Erhitzen der Platine auf Austenitisierungstemperatur; Umformen und Härten der Platine zu einem gehärteten Formteil; Reinigen des gehärteten Formteils; Beschichten des gehärteten Formteils mit einer metallischen Beschichtung in einem Tauchbad mit einer Elektrolytlösung, wobei während des Beschichtens zumindest ein Hilfselement in dem Tauchbad verwendet wird, derart, dass der Aufbau der Beschichtung partiell beeinflusst wird. Insbesondere ist vorgesehen, dass das zumindest eine Hilfselement benachbart zum Formteil positioniert wird, wobei der Aufbau der Beschichtung auf dem gehärteten Formteil in Abhängigkeit von der Position des Hilfselements, beziehungsweise vom Abstand zwischen Hilfselement und Formteil, lokal beeinflusst wird.

Ein Vorteil besteht darin, dass die Beschichtung durch das erst nach dem Umformen und Härten stattfindenden Beschichten keinen ungewünschten umform- oder härteprozessbedingten Einflüssen unterliegt. Es kann eine im Wesentlichen gleichmäßige Verteilung und Schichtdicke über der Oberfläche des Formteils erzeugt werden, die insbesondere rissfrei ist. Der Umformprozess hat keine negativen mechanischen oder thermischen Auswirkungen auf die Beschichtung, wie es bei Verfahrensführungen mit vor dem Umformen durchgeführtem Beschichten der Platine oder des Bandmaterials der Fall sein kann. Der Aufbau einer gleichmäßigen Beschichtung wird zusätzlich dadurch unterstützt, dass in dem Tauchbad zumindest ein Hilfselement vorgesehen ist, mit dem der Schichtaufbau auf der Oberfläche des Formteils partiell beziehungsweise lokal beeinflusst wird. Insgesamt wird damit die Qualität der Beschichtung auf dem Formteil und damit die Korrosionsbeständigkeit des Formteils deutlich verbessert. Mit zumindest einem Hilfselement ist gemeint, dass ein oder mehrere Hilfselemente vorgesehen sein können, die im Hinblick auf ihre das Beschichten beeinflussenden Eigenschaften individuell ausgestaltet sein können. Insbesondere können bei Verwendung mehrerer Hilfselemente diese voneinander abweichende Eigenschaften, wie Form, elektrische Leitfähigkeit und/oder Positionierbarkeit haben. Sofern vorliegend von einem oder dem Hilfselement die Rede ist, soll dies stets im Sinne von mindestens einem Hilfselement gemeint sein.

Nach einer bevorzugten Verfahrensführung wird das Beschichten derart durchgeführt, dass eine mittlere Schichtdicke von mindestens 3 µm, insbesondere mindestens 7 µm auf das gehärtete Formteil aufgebracht wird. Hiermit wird ein guter Korrosionsschutz des Formteils sichergestellt. Eine Obergrenze für die Schichtdicke kann beispielsweise bei maximal 30 µm, insbesondere maximal 15 µm liegen, so dass der Beschichtungsprozess verhältnismäßig schnell durchgeführt werden kann. Es versteht sich, dass die genannten Ober- und Untergrenzen beliebig miteinander kombinierbar sind, und grundsätzlich auch andere Schichtdicken denkbar sind. Die Schichtdicke kann durch die Hilfselemente in Teilabschnitten auch individuell eingestellt werden. Beispielsweise ist es möglich, durch entsprechende Anordnung der Hilfselemente in Teilbereichen gezielt eine größere Schichtdicke herzustellen als in anderen Teilbereichen. Ebenso kann der Prozess auf eine möglichst einheitliche Schichtdicke über der gesamten Oberfläche des Bauteils eingestellt werden.

Die Beschichtung wird galvanisch (elektrolytisch) aufgebracht. Hierfür werden Anoden aus Beschichtungsmaterial, beispielsweise aus reinem Zink oder aus Zink und anderen Legierungselementen verwendet, die bei Bestromung Metallionen an den Elektrolyten abgeben. Alternativ können auch formstabile Anoden zum Einsatz kommen; in diesem Fall ist das Beschichtungsmaterial bereits im Elektrolyt gelöst. Die Zinkionen und gegebenenfalls Ionen der weiteren Legierungselemente werden auf dem Formteil, das als Kathode geschaltet ist, als Atome abgeschieden und bilden die Beschichtung.

Das Beschichtungsmaterial hat vorzugsweise einen Anteil von mindestens 50 Masseprozent Zink, vorzugsweise mindestens 90 Masseprozent Zink, wobei der Zinkanteil auch 100 Prozent betragen kann (Reinzinkbeschichtung). Die Dauer des Beschichtungsprozesses beträgt vorzugsweise maximal 20 Minuten, insbesondere maximal 15 Minuten, besonders bevorzugt maximal 10 Minuten. Während des Beschichtens wird nach einer günstigen Verfahrensführung eine relative Strömung zwischen dem gehärteten Formteil und der Elektrolytlösung erzeugt. Mit relativer Strömung ist insbesondere gemeint, dass sich die Elektrolytlösung und das Formteil zumindest an einem Teilbereich der Oberfläche des Formteils relativ zueinander bewegen. Hierfür kann die Elektrolytlösung und/oder das Formteil bewegt werden. Eine relative Strömung an der Oberfläche des Formteils wirkt in vorteilhafterweise einer ungewünschten Bildung von Wasserstoff in der Elektrolytlösung entgegen, so dass auch der Wasserstoffeintrag in das Formteil gering gehalten wird. Liegt der Wasserstoffeintrag beim Beschichten unterhalb bestimmter Höchstgrenzen, kann auf eine nachfolgende Wärmebehandlung wie eine Effusionsglühe verzichtet werden.

Das zumindest eine Hilfselement kann aus einem Material gestaltet werden, das in Bezug auf den Beschichtungsprozess zumindest eines von inert, nichtlöslich, unbeschichtbar und formstabil ist. Das Hilfselement wird während des Beschichtungsprozesses folglich nicht aufgelöst und selbst auch nicht beschichtet. Vorzugsweise ist die Form zumindest eines Hilfselements an die Kontur des zu beschichtenden Bauteils beziehungsweise zumindest eines Abschnitts des Bauteils angepasst. Insofern wird das jeweilige Hilfselement bauteilspezifisch für das zu beschichtende Formteil gestaltet. Während des Beschichtens wird zumindest ein Hilfselement relativ zum Formteil ortsfest gehalten.

Zumindest ein Hilfselement beziehungsweise eines der Hilfselemente kann aus elektrisch leitfähigem Material bestehen, welches während des Beschichtens gegenüber dem gehärteten Formteil mit einem elektrischen Potential beaufschlagt wird. Bei Verwendung mehrerer elektrisch leitfähiger Hilfselemente können diese während des Beschichtens mit unterschiedlichen elektrischen Potentialen beaufschlagt werden. Hiermit lässt sich die auf dem Formteil zu erzeugende Schichtdicke partiell individuell einstellen. Beispielsweise kann der Schichtaufbau in Teilbereichen des Formteils, in denen aufgrund geometrischer Verhältnisse oder anderer Rahmenbedingungen der Schichtaufbau grundsätzlich langsamer stattfinden würde, durch ein erhöhtes elektrisches Potential beschleunigt werden. Ergänzend oder alternativ kann zumindest eines der Hilfselemente aus elektrisch leitfähigem Material vorgesehen sein, das mit dem zu beschichtenden Bauteil mittels eines elektrischen Leiters verbunden wird.

Nach einer möglichen Verfahrensführung kann das Beschichten derart durchgeführt werden, dass das zu beschichtende Formteil in zumindest einem Schritt mit gepulstem Strom beaufschlagt wird. Alternativ oder ergänzend kann das Formteil auch mit ungepulstem Strom beaufschlagt werden. Bei Behandlung mit gepulstem und ungepulstem Strom ist die Reihenfolge variabel, das heißt, das Formteil kann in einem ersten Schritt mit gepulstem Strom und in einem anschließenden zweiten Schritt mit ungepulstem Strom, oder umgekehrt, erst mit ungepulstem und dann mit gepulstem Strom. Durch eine gepulste Bestromung im ersten Teilschritt wird ein nanokristalliner Schichtaufbau erreicht, der beispielsweise eine Schichtdicke von ein bis zwei Mikrometern haben kann. Die Beschichtung hat also werkstücknah einen besonders dichten Aufbau, welcher als Diffusionssperrschicht wirkt. Das Behandeln der Elektrolytlösung mit gepulstem Strom kann in einer ersten Station erfolgen; in einer anschließenden zweiten Station kann die Elektrolytlösung zum Beschichten des Formteils mit ungepulstem Strom beaufschlagt beaufschlagt werden. Das Beaufschlagen mit Strom kann über separate Anoden und/oder über die elektrisch leitenden Hilfselemente erfolgen.

Alternativ oder in Ergänzung zur Verwendung eines Hilfselements aus elektrisch leitendem Material kann zumindest eines der Hilfselemente aus elektrisch nichtleitendem Material bestehen. Ein solches nicht-leitendes Hilfselement wird für den Beschichtungsprozess insbesondere derart in dem Tauchbad angeordnet, dass der Schichtaufbau partiell gehemmt wird. Das nicht-leitende Hilfselement wirkt insofern als Maskierung und kann den Beschichtungsprozess lokal hemmen.

Unabhängig von der Ausgestaltung der Hilfselemente kann nach einer möglichen Verfahrensführung vorgesehen sein, dass zumindest eines der Hilfselemente relativ zum Formteil bewegbar ist, was die Möglichkeit mit einschließen soll, dass das Hilfselement in Richtung Formteil und/oder das Formteil in Richtung Hilfselement bewegt wird. Beispielsweise kann zumindest eines der Hilfselemente in einer Halteeinrichtung aufgenommen werden, wobei die Halteeinrichtung in dem Tauchbad bewegbar ist. Unabhängig von der Verwendung einer Halteeinrichtung kann insbesondere vorgesehen sein, dass das Hilfselement nach dem Eintauchen des gehärteten Formteils in das Tauchbad relativ zu diesem von einer Ruheposition, in der das Hilfselement von dem Formteil beabstandet ist, in eine Behandlungsposition, in der das Hilfselement an das Formteil angenähert ist, bewegt wird. Durch die Bewegbarkeit des jeweiligen Hilfselements relativ zum Formteil kann das Hilfselement besonders genau für den Beschichtungsprozess positioniert werden und so lokal den Schichtaufbau in Abhängigkeit von der Position beziehungsweise Abstand und der Ausgestaltung des Hilfselements beeinflussen, beispielsweise fördern oder hemmen. Es kann ferner vorgesehen sein, dass die Halteeinrichtung der Hilfselemente in dem Tauchbad verbleibt, in dem es beweglich angeordnet ist.

Das Beschichten erfolgt durch Eintauchen des Werkstücks in das Tauchbad mit einer Elektrolytlösung. Nach einer ersten Möglichkeit kann das Beschichten im kontinuierlichen Verfahren erfolgen, wobei das Werkstück unter fortlaufender Bewegung durch das Tauchbad beschichtet wird. Aufgrund der relativen Strömung an der Werkstückoberfläche ergibt sich eine gute Reproduzierbarkeit des Beschichtungsprozesses sowie eine gleichmäßige Beschichtung über der Oberfläche. Es versteht sich, dass im Rahmen des kontinuierlichen Verfahrens auch zeitliche Pausen, in denen der Vorschub kurzfristig gestoppt ist, in gewissem Umfang wie sie beispielsweise bei einem Kettenfördersystem vorkommen, mit umfasst sein sollen. Alternativ kann das Beschichten auch im diskontinuierlichen Verfahren durchgeführt werden, wobei die Werkstücke in ein Tauchbad eingetaucht und nach Ablauf des Beschichtungsprozesses wieder herausgehoben werden. Auch das diskontinuierliche Verfahren kann in vorteilhafter Weise die Erzeugung einer relativen Strömung mit umfassen, beispielsweise durch Düsen.

Die Durchführung des Beschichtungsprozesses unter relativer Strömung bewirkt in vorteilhafter Weise, dass durch den nachströmenden Elektrolyten der Zink-Gehalt an der Werkstückoberfläche hoch gehalten wird. Einer ungewünschten Entstehung von Wasserstoff im Elektrolyten und einem entsprechenden Eintrag in das Werkstück wird somit während des Beschichtungsprozesses entgegengewirkt. Eine Wasserstoffversprödung des Werkstücks wird verhindert, so dass eine nachfolgende Wärmebehandlung verzichtbar ist.

Als Elektrolytlösung wird vorzugsweise eine saure Elektrolytlösung verwendet, die einen pH-Wert von insbesondere 2 bis 4 aufweist. Es versteht sich jedoch, dass alternativ auch ein alkalischer Elektrolyt verwendbar ist mit einem pH-Wert von insbesondere größer als 7. Ein saurer Elektrolyt hat den Vorteil, dass er mit hohen Stromdichten beaufschlagt werden kann, das heißt bei vorgegebener Zeit ist die abgeschiedene Beschichtungsdicke relativ groß, und dass der Wasserstoffeintrag in das Bauteil verhältnismäßig gering ist. Nachteilig ist jedoch, dass ein saurer Elektrolyt eine schlechtere Streufähigkeit hat. In alkalischen Elektrolyten verläuft die Abscheidung dagegen homogener, das heißt der Elektrolyt hat eine bessere Streufähigkeit, so dass sich ein besonders gleichmäßiger Schichtaufbau am Werkstück ergibt.

Im Folgenden wird näher auf die dem Beschichten vorgeschalteten Verfahrensschritte eingegangen.

Ausgangspunkt ist zumindest ein Bandmaterial aus einem härtbaren Stahlwerkstoff. Als härtbarer Stahlwerkstoff wird vorzugsweise ein manganhaltiger Werkstoff verwendet, der zusätzlich noch weitere Mikrolegierungselemente beinhalten kann, wie beispielsweise Niob und/oder Titan. Dabei beträgt der Masseanteil dieser Mikrolegierungselemente an der Gesamtmasse vorzugsweise maximal 1000 ppm. Es können weitere Mikrolegierungselemente in geringen Masseanteilen hinzukommen, wie Bor und/oder Vanadium. Beispiele für einen verwendbaren Stahlwerkstoff sind 22MnB5, 34MnB5 oder auch 51 CrV4. Das Ausgangsmaterial (Bandmaterial) hat vorzugsweise eine Zugfestigkeit von mindestens 450 MPa und/oder von höchstens 850 MPa. Das fertig hergestellte Formteil kann eine Endzugfestigkeit von mindestens 1100 MPa, vorzugsweise mindestens 1300 MPa, besonders bevorzugt sogar über 1500 MPa zumindest in Teilbereichen aufweisen.

Aus dem zumindest einen Bandmaterial werden Platinen hergestellt, die nach einer bevorzugten Verfahrensführung derart erzeugt werden, dass sie Abschnitte mit unterschiedlichen Dicken aufweisen. Die Abschnitte mit unterschiedlichen Dicken können nach einer ersten Verfahrensführung durch Flexibles Walzen von Bandmaterial und anschließendes Herausarbeiten der Platine aus dem flexibel gewalzten Bandmaterial erfolgen. Die so hergestellten Platinen werden auch als Tailor Rolled Blanks bezeichnet. Nach einer alternativen zweiten Verfahrensführung, die prinzipiell auch mit der ersten kombinierbar ist, werden die Platinen durch Verbinden von mehreren Teilplatinen hergestellt, die voneinander abweichende Dicken haben. Die Teilplatinen können entsprechend aus mehreren Bandmaterialien mit voneinander abweichenden Blechdicken hergestellt werden. Das Verbinden der einzelnen Teilplatinen kann beispielsweise mittels Schweißen erfolgen. Eine so aus mehreren Teilplatinen hergestellte Platine wird auch als Tailor Welded Blank bezeichnet. Durch die unterschiedlichen Dicken können die aus den Platinen hergestellten Bauteile in vorteilhafter Weise partiell an die technischen Anforderungen wie spezifische Belastungen angepasst werden. Es versteht sich jedoch, dass das Verfahren auch für Platinen mit einheitlicher Blechdicke verwendbar ist.

Unter Flexiblem Walzen wird ein Walzprozess verstanden, bei dem Stahlband mit einheitlicher Dicke über der Länge zu Bandmaterial mit variabler Dicke über der Länge gewalzt wird. Die Ausgangsdicke vor dem Flexiblen Walzen kann bis zu 8 mm betragen. Als Bandmaterial für das Flexible Walzen kann Warmband oder Kaltband verwendet werden, wobei diese Begriffe im Sinne der Fachsprache zu verstehen sind. Unter Warmband wird ein Walzstahlfertigerzeugnis (Stahlband) verstanden, das durch Walzen nach vorherigem Erwärmen erzeugt wird. Mit Kaltband ist ein kaltgewalztes Stahlband (Flachstahl) gemeint, bei dem die letzte Dickenabnahme durch Walzen ohne vorhergehendes Erwärmen erfolgt. Nach dem Flexiblen Walzen kann das Bandmaterial beispielsweise eine Dicke von maximal 6,0 mm an der dicksten Stelle haben. Vorzugsweise wird das Flexible Walzen derart durchgeführt, dass zumindest zwei Abschnitte mit unterschiedlicher Dicke erzeugt werden, wobei das Verhältnis einer ersten Dicke eines dünneren ersten Abschnitts zu einer zweiten Dicke eines zweiten Abschnitts kleiner 0,8, insbesondere kleiner 0,7, bevorzugt kleiner 0,6 ist. Es versteht sich jedoch, dass je nach Anforderungen an das fertige Erzeugnis prinzipiell beliebig viele Abschnitte unterschiedlicher Dicke erzeugt werden können. Dabei wird die Dicke über der Länge insbesondere so eingestellt, dass die Belastungen des Bauteils zumindest im Wesentlichen einheitlich sind, beziehungsweise Belastungsspitzen vermieden oder zumindest reduziert werden.

Das Herausarbeiten der Platinen aus dem Bandmaterial, was auch als Vereinzeln beschrieben werden kann, umfasst begrifflich jede Form der Erzeugung von Platinen oder Formschnitten aus dem Bandmaterial. Dies kann durch mechanischen Zuschnitt, wie Ausstanzen oder Ausschneiden, oder mittels Laserschneiden erfolgen. Unter Platinen werden insbesondere rechteckige Blechtafeln verstanden, die aus dem Bandmaterial herausgetrennt worden sind. Als Formschnitte werden aus dem Bandmaterial herausgearbeitete Blechelemente verstanden, deren Außenkontur an die Form des Endprodukts bereits angepasst ist. Bei der Erzeugung von Formschnitten oder Platinen kann am Bandmaterial ein Rand verbleiben, welcher nicht weiterverwendet wird, wobei auch ein einfaches Ablängen des Bandmaterials in Teilstücke vorgenommen werden kann, bei dem kein Rand übrig bliebe. Vorliegend wird die Bezeichnung Platine einheitlich sowohl für Formschnitte als auch für Rechteckplatinen als auch für aus mehreren Teilplatinen zusammengesetzte Platinen verwendet.

Das Umformen der Platine kann nach einer ersten Verfahrensführung als Warmumformen durchgeführt werden. Hierunter werden Umformvorgänge verstanden, bei denen die Werkstücke vor dem Umformen auf eine Temperatur im Bereich oberhalb der Austenitisierungstemperatur erwärmt werden und bei denen zumindest Teilbereiche während des Umformvorgangs gehärtet werden. Das Erwärmen wird in einer geeigneten Wärmeeinrichtung, beispielsweise einem Ofen vorgenommen. Das Warmumformen kann nach einer ersten Möglichkeit als indirekter Prozess durchgeführt werden, der die Teilschritte Kaltvorformen der Platine zu einem vorgeformten Bauteil, anschließendes Erwärmen zumindest von Teilbereichen des kalt vorgeformten Bauteils auf Austenitisierungstemperatur sowie anschließendes Warmumformen zur Erzeugung der Endkontur des Erzeugnisses umfasst. Unter Austenitisierungstemperatur ist dabei ein Temperaturbereich zu verstehen, bei dem zumindest eine Teilaustenitisierung (Gefügestruktur im Zweiphasengebiet Ferrit und Austenit) vorliegt. Darüber hinaus ist es auch möglich, nur Teilbereiche der Platine zu austenitisieren, um beispielsweise ein partielles Härten zu ermöglichen. Das Warmumformen kann nach einer zweiten Möglichkeit auch als direkter Prozess durchgeführt werden, der dadurch gekennzeichnet ist, dass zumindest Teilbereiche der Platine direkt auf Austenitisierungstemperatur erwärmt und anschließend zur gewünschten Endkontur in einem Schritt warmumgeformt und gehärtet werden. Ein vorhergehendes (kaltes) Vorformen findet hier nicht statt. Auch beim direkten Prozess kann durch Austenitisieren von Teilbereichen ein partielles Härten erreicht werden. Für beide Prozesse gilt, dass ein Härten von Teilbereichen der Bauteile auch durch unterschiedlich temperierte Werkzeugbereiche möglich ist, beziehungsweise durch Verwendung mehrerer Werkzeugwerkstoffe, die unterschiedliche Abkühlgeschwindigkeiten ermöglichen. In letzterem Fall kann die ganze Platine beziehungsweise das ganze Bauteil komplett austenitisiert werden.

Nach einer alternativen Verfahrensführung, können die Blechplatinen auch kaltumgeformt werden. Unter Kaltumformung werden Umformvorgänge verstanden, bei denen die Platinen vor dem Umformen nicht erwärmt werden, sondern bei Raumtemperatur stattfinden. Kaltumformen wird insbesondere als Prozess zum Umformen weicher Karosseriestähle verwendet. Nach dem Kaltumformen können die Formteile optional gehärtet werden.

Während oder nach der Umformung kann als integrierter oder separater Verfahrensschritt eine Wärmebehandlung vorgesehen werden, mit der im Werkstück Bereiche unterschiedlicher Duktilität erzeugt werden. Unter Duktilität wird die Verformungsfähigkeit des Stahlwerkstoffs ohne Schädigung beziehungsweise Rissbildung verstanden. Die Duktilität kann beispielsweise anhand der Bruchdehnung beziehungsweise Brucheinschnürung im Zugversuch beurteilt werden. Eine erhöhte Duktilität in Teilbereichen führt dort in vorteilhafter Weise zu einer verminderten Kantenrissanfälligkeit und verbesserten Schweißfähigkeit des Materials.

Nach dem Härten wird das Formteil gereinigt. Das Reinigen wird nach einer bevorzugten Verfahrensführung so durchgeführt, dass die reinigungsbedingte Zunahme an diffusiblem Wasserstoff, gemessen unmittelbar vor und nach dem Reinigen, weniger als 0,7 ppm (parts per million) beträgt. Mit unmittelbar vor und nach dem Reinigen kann ein Zeitfenster von jeweils bis zu 10 min vorher beziehungsweise nachher umfasst sein, innerhalb dem der Gehalt an diffusiblem Wasserstoff im Material gemessen wird. Auf diese Weise können ungewünschte Wasserstoffversprödungen des Stahlwerkstoffs vermieden oder zumindest reduziert werden.

Nach einer ersten Verfahrensführung kann das Reinigen des Formteils mechanisch erfolgen. Hiermit ist jede Behandlung gemeint, bei der nach dem Umformen vorhandene ungewünschte Verunreinigungen von der Oberfläche mechanisch abgetragen werden. Vorteil des mechanischen Reinigens ist, dass kein ungewünschter Wasserstoff in das Werkstück eingebracht wird. Vorzugsweise wird das Formteil gestrahlt oder gebürstet. Als Verfahren zum Strahlen kommen insbesondere Kugelstrahlen, Strahlen mit Korund oder mit Trockeneis (CO2) in Frage. Durch das Strahlverfahren wird eine rauere Oberfläche als im ungestrahlten Zustand erzeugt, was sich günstig auf die Hafteigenschaften einer später aufzutragenden Beschichtung auswirkt. Nach einer alternativen Verfahrensführung kann das Reinigen auch mittels anodischem Beizen durchgeführt werden. Das anodische Beizen kann durch Eintauchen der Formteile in ein Tauchbad erfolgen, wobei der Abtrag von Zunder und anderen Verunreinigungen unter Einwirkung von Gleichstrom erfolgt.

Es versteht sich, dass zusätzlich zu den oben genannten Verfahrensschritten noch weitere Schritte vor-, zwischen- oder nachgeschaltet sein können. Beispielsweise kann vor oder nach dem Flexiblen Walzen eine Wärmebehandlung des Bandmaterials erfolgen. Nach dem Flexiblen Walzen kann ein Bandrichten vorgesehen sein. Ferner kann vor dem Beschichten eine Vorbehandlung, wie Spülen und/oder Dekapieren (Oberflächenaktivierung), der Werkstücke vorgesehen sein. Nach dem Beschichten kann als weitere Behandlung eine Spül-, Passivierungs-, Trocknungs-und/oder Wärmebehandlung vorgenommen werden.

Die Verfahrensschritte werden vorzugsweise derart durchgeführt, dass nach dem Beschichten eine Menge von maximal 0,7 ppm diffusiblem Wasserstoff in dem Formteil enthalten ist. Auf diese Weise können ungewünschte Wasserstoffversprödungen des Stahlwerkstoffs vermieden oder zumindest reduziert werden. Beim Reinigen wird der Wasserstoffeintrag insbesondere durch anodisches Beizen gering gehalten. Beim Beschichten wird ein geringer Wasserstoffeintrag durch die Verwendung der Hilfselemente unterstützt. Ein besonders geringer Wasserstoffeintrag wird durch die Kombination der Verwendung von Hilfselementen und eines sauren Elektrolyten mit relativer Strömung erreicht.

Die Aufgabe wird ferner durch eine Anlage zum Herstellen eines gehärteten Formteils gelöst, umfassend: eine Walzvorrichtung zum Walzen von härtbarem Bandmaterial; eine Schneidvorrichtung zum Erzeugen einer Platine aus dem Bandmaterial; eine Wärmebehandlungsvorrichtung zum Erhitzen der Platine auf Austenitisierungstemperatur; eine Umform- und Härtevorrichtung zum Umformen und Härten der Platine zu einem gehärteten Formteil; eine Reinigungsvorrichtung zum Reinigen des gehärteten Formteils; eine Beschichtungsvorrichtung zum Beschichten des gehärteten Formteils mit einer metallischen Beschichtung, wobei die Beschichtungsvorrichtung ein Tauchbad mit einer Elektrolytlösung und zumindest ein Hilfselement in dem Tauchbad aufweist, welches derart gestaltet ist, dass es den Aufbau der Beschichtung auf dem gehärteten Formteil partiell beeinflusst. Insbesondere ist vorgesehen, dass das zumindest eine Hilfselement von einer von dem Formteil beabstandeten in eine an das Formteil angenäherte Position derart bewegbar ist, dass der Aufbau der Beschichtung auf dem Formteil in der angenäherten Position lokal beeinflusst wird.

Mit der Anlage werden dieselben Vorteile erreicht, wie mit dem oben genannten Verfahren, so dass zur Vermeidung von Wiederholungen auf die obige Beschreibung Bezug genommen wird. Mit der erfindungsgemäßen Anlage kann das erfindungsgemäße Verfahren durchgeführt werden, und umgekehrt. Insofern versteht es sich, dass jedes einzelne der verfahrensbezogenen Merkmale auch für die Anlage gilt, und umgekehrt, jedes anlagenbezogene Merkmal auch für das Verfahren. Die einzelnen Vorrichtungen wie Walzvorrichtung, Schneidvorrichtung, Wärmebehandlungsvorrichtung, Umformvorrichtung und Reinigungsvorrichtung, welche gemeinsam die erfindungsgemäße Anlage bilden, können in räumlicher Nähe zueinander angeordnet sein, was den Handhabungs- und Transportaufwand der Werkstücke entsprechend gering hält, oder auch an räumlich getrennten Orten voneinander angeordnet sein.

Nach einer bevorzugten Ausgestaltung ist das oder zumindest eines der Hilfselemente bezüglich des Beschichtungsprozesses inert und/oder nichtlöslich und/oder elektrolytisch unbeschichtbar und/oder formstabil gestaltet, und kann insbesondere als Hilfsanode gestaltet sein. Eine formstabile Anode wird während des Beschichtungsprozesses nicht aufgelöst. Vorzugsweise ist zumindest eines der Hilfselemente bauteilspezifisch an die Form des zu beschichtenden Bauteils angepasst.

Vorzugsweise weist die Beschichtungsvorrichtung eine Halteeinrichtung auf, an der das Hilfselement beziehungsweise zumindest eines der Hilfselemente befestigt ist, wobei die Halteeinrichtung im Tauchbad relativ zum gehärteten Formteil bewegbar ist, um das Hilfselement für den Beschichtungsprozess mit definiertem Abstand am Formteil zu positionieren. Insofern kann die Halteeinrichtung auch als Positioniereinrichtung bezeichnet werden. Bei Verwendung mehrerer Hilfselemente können nach einer ersten Möglichkeit auch mehrere Halteeinrichtungen vorgesehen werden. Alternativ können auch mehrere Hilfselemente in einer Halteeinrichtung aufgenommen werden. Die Funktionsweise der Halteeinrichtung ist vorzugsweise derart, dass hierin ein oder mehrere der Hilfselemente aufgenommen sind. Nach Eintauchen des zu beschichtenden Bauteils in das Tauchbad wird die Halteeinrichtung mit zumindest einem darin aufgenommenen Hilfselement an das Bauteil herangefahren, wobei das beziehungsweise die Halteelemente in die gewünschte Position benachbart zum Formteil gebracht werden. In dieser Position beeinflussen die Hilfselemente den Beschichtungsaufbau in gewünschter Weise.

Zumindest eines der Hilfselemente kann einen oder mehrere Durchbrüche aufweisen, durch die der Elektrolyt gezielt auf einen Teilbereich des Formteils strömen kann. Auf diese Weise lässt sich lokal eine verstärkte Abscheidung auf dem Formteil erreichen. Insgesamt werden ein oder mehrere der Hilfselemente vorzugsweise derart das Formteil umschließend angeordnet, dass eine gerichtete Umströmung des Bauteils durch den Elektrolyt ermöglicht wird.

Nach einer bevorzugten Ausgestaltung weist die Beschichtungsvorrichtung eine Strömungseinrichtung auf, welche eine relative Strömung zwischen der Elektrolytlösung und dem gehärteten Formteil erzeugt. Die Strömung wirkt der Bildung von Wasserstoff entgegen und vermindert so die Gefahr der Wasserstoffversprödung des Formteils. Die erzeugte relative Strömungsgeschwindigkeit zwischen Werkstück und Elektrolyt kann beispielsweise zwischen 10 mm/sec und 600 mm/sec liegen. Die Strömungseinrichtung kann nach einer ersten Möglichkeit so gestaltet sein, dass die Formteile hiermit durch das ortsfeste Tauchbecken hindurchbewegt werden. Alternativ oder in Ergänzung kann die Strömungseinrichtung eine oder mehrere Pumpen aufweisen, welche die Elektrolytlösung in eine Strömungsbewegung relativ zum Werkstück versetzen. Vorzugsweise wird die Elektrolytlösung mittels Düsen auf die Formteile gestrahlt, was unter einem Strahlwinkel von vorzugsweise 90° bis zu ± 45° in Bezug auf die Werkstückoberfläche erfolgen kann. Grundsätzlich kann in Elektrolytlösungen eine inhomogene Verteilung der Stromdichte auf der Werkstückoberfläche vorliegen. Daher wird die Strömung der Elektrolytlösung relativ zu den Werkstücken vorzugsweise so eingestellt, dass eine homogene Verteilung der Stromdichte auf der Werkstückoberfläche erzeugt wird. Zum Ausgleich einer ungleichen Stromdichte dienen auch die oben genannten Hilfselemente, die so an dem Formteil angeordnet werden, dass insgesamt eine Beschichtung mit zumindest weitestgehend gleichmäßiger Schichtdicke erzeugt wird. Die Stromdichte zum Beschichten kann zwischen 2 und 70 A/dm² liegen.

Eine Lösung der oben genannten Aufgabe besteht weiter in einem Erzeugnis, insbesondere als Strukturbauteil für ein Kraftfahrzeug, das gemäß dem erfindungsgemäßen Verfahren beziehungsweise auf der erfindungsgemäßen Anlage hergestellt ist.

Bevorzugte Ausführungsbeispiele werden nachstehend anhand der Zeichnungsfiguren erläutert. Hierin zeigt:
- Figur 1: ein erfindungsgemäßes Verfahren zur Herstellung eines Erzeugnisses aus flexibel gewalztem Bandmaterial schematisch als Ablaufdiagramm;
- Figur 2: eine erfindungsgemäße Vorrichtung zum Beschichten eines Erzeugnisses in einer ersten Ausführungsform
A) in einer ersten Position (Ruheposition);
B) in einer zweiten Position (Arbeitsposition);
- Figur 3: das Erzeugnis aus Figur 2 mit weiteren Einzelzeiten der Beschichtungsvorrichtung
A) in einer ersten Ansicht;
B) im Querschnitt gemäß Schnittlinie III-III aus Figur 3A);
C) in einer zweiten Ansicht;
- Figur 4: eine erfindungsgemäße Vorrichtung zum Beschichten eines Erzeugnisses in einer weiteren Ausführungsform
A) in einer ersten Ansicht;
B) im Querschnitt gemäß Schnittlinie IV-IV aus Figur 4A);
- Figur 5: eine erfindungsgemäße Vorrichtung zum Beschichten eines Erzeugnisses in einer weiteren Ausführungsform
A) in einer ersten Ansicht;
B) im Querschnitt gemäß Schnittlinie V-V aus Figur 5A).

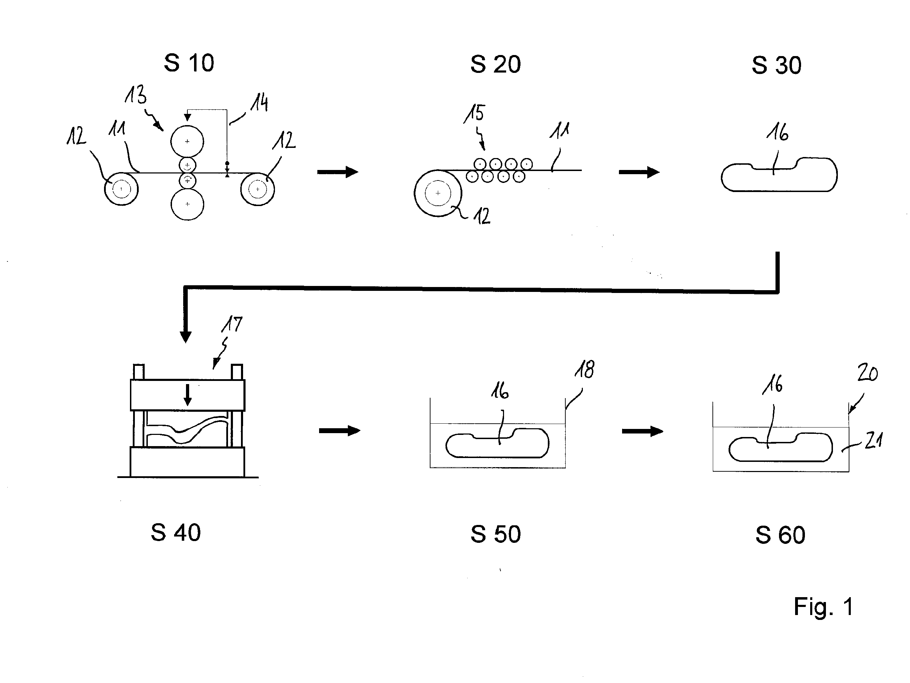

Die Figur 1 zeigt schematisch ein erfindungsgemäßes Verfahren zur Herstellung eines Erzeugnisses aus Bandmaterial. Im Verfahrensschritt S10 wird das Bandmaterial 11, das im Ausgangszustand auf einem Coil 12 aufgewickelt ist, walzend bearbeitet, und zwar mittels flexiblem Walzen. Hierfür wird das Bandmaterial 11, das vor dem flexiblen Walzen eine weitestgehend konstante Blechdicke über der Länge aufweist, mittels Walzen 13 derart gewalzt, das es längs der Walzrichtung eine variable Blechdicke erhält. Während des Walzens wird der Prozess mittels einer Walzspaltregelung 14 überwacht und gesteuert, wobei die von einer Blechdickenmessung ermittelten Daten als Eingangssignal zur Steuerung der Walzen verwendet werden. Nach dem flexiblen Walzen hat das Bandmaterial 11 in Walzrichtung unterschiedliche Dicken. Das Bandmaterial 11 wird nach dem flexiblen Walzen wieder zum Coil 12 aufgewickelt, so dass es dem nächsten Verfahrensschritt zugeführt werden kann.

Als Werkstoff für das Bandmaterial wird ein härtbarer Stahlwerkstoff verwendet, wie beispielsweise 22MnB5, 34MnB5 oder 51 CrV4. Das Ausgangsmaterial hat vorzugsweise eine Zugfestigkeit von mindestens 450 MPa und höchstens 850 MPa.

Nach dem Flexiblen Walzen kann das Bandmaterial in einer Bandrichtvorrichtung 15 geglättet werden. Der Verfahrensschritt S20 des Glättens ist optional und kann auch weggelassen werden.

Nach dem Flexiblen Walzen (S10) beziehungsweise Glätten (S20) werden im nächsten Verfahrensschritt S30 aus dem Bandmaterial 11 einzelne Blechplatinen 16 herausgearbeitet. Das Herausarbeiten der Blechplatinen 16 aus dem Bandmaterial erfolgt vorzugsweise mittels Stanzen oder Schneiden. Je nach Form der zu fertigenden Blechplatinen kann diese aus dem Bandmaterial 11 als Formschnitt ausgestanzt werden, wobei ein Rand am Bandmaterial stehen bleibt, der nicht weiterverwendet wird, oder das Bandmaterial kann einfach in Teilstücke abgelängt werden.

Nach dem Erzeugen von Platinen aus dem Bandmaterial erfolgt anschließend im Verfahrensschritt S40 ein Umformen und Härten des Werkstücks zum gewünschten Formteil.

Das Umformen und Härten kann als direkter oder indirekter Prozess durchgeführt werden. Beim direkten Prozess werden die Platinen vor dem Umformen auf Austenitisierungstemperatur erwärmt, was beispielsweise durch Induktion oder in einem Ofen erfolgen kann. Unter Austenitisierungstemperatur ist dabei ein Temperaturbereich zu verstehen, bei dem zumindest eine Teilaustenitisierung (Gefügestruktur im Zweiphasengebiet Ferrit und Austenit) vorliegt. Es können aber auch nur Teilbereiche der Platine austenitisiert werden, um beispielsweise ein partielles Härten zu ermöglichen.

Nach dem Erhitzen auf Austenitisierungstemperatur wird die erhitzte Platine 16 in einem formgebenden Werkzeug 17 umgeformt und gleichzeitig mit hoher Abkühlgeschwindigkeit abgekühlt, wobei das Bauteil seine Endkontur erhält und gleichzeitig gehärtet wird. Dieser Prozess, welcher auch als Warmumformen bezeichnet wird, ist als Verfahrensschritt S40 dargestellt. Eine besondere Form des Warmumformens ist das Presshärten, das bei hohen Drücken durchgeführt wird.

Beim indirekten Warmumformen wird die Platine 16 vor dem Austenitisieren noch einem Vorformen unterzogen. Das Vorformen erfolgt in kaltem Zustand der Platine, das heißt ohne vorherige Erwärmung. Beim Vorformen erhält das Bauteil ein Profil, das noch nicht der Endform entspricht, aber an diese angenähert ist. Nach dem Vorformen findet dann, wie beim direkten Prozess, ein Austenitisieren und Warmformen statt, wobei das Bauteil seine Endkontur erhält und gehärtet wird.

Im Rahmen des Umformens können im Werkstück Bereiche mit unterschiedlicher Duktilität und/oder Bereiche mit unterschiedlicher Festigkeit erzeugt werden.

Der Stahlwerkstoff sollte, sofern ein Warmumformen (direkt oder indirekt) vorgesehen ist, einen Anteil an Kohlenstoff von mindestens 0,1 Masseprozent bis 0,35 Masseprozent aufweisen. Unabhängig von der Art des Warmumformens kann das vollständige Werkstück oder nur Teilbereiche gehärtet werden. Beim Durchführen des Warmumformens derart, dass nur Teilbereiche gehärtet werden, weist das Formteil Bereiche mit reduzierter Festigkeit bei gleichzeitig erhöhter Bruchdehnung auf. Durch Aufbringen einer Beschichtung in einem späteren Verfahrensschritt ausschließlich in diesen Weichzonen wird die Gefahr der Wasserstoffversprödung in den gehärteten Bereichen vermindert.

Nach dem Umformen und Härten (Verfahrensschritt S40) werden die Formteile 16 im Verfahrensschritt S50 einem Reinigungsprozess unterzogen. Das Reinigen der Formteile erfolgt derart, dass eine Menge von maximal 0,7 ppm diffusiblem Wasserstoff (H) in das Formteil eingebracht wird. Hierfür ist vorliegend ein anodisches Beizen vorgesehen. Beim anodischen Beizen werden die Formteile 16 in ein Tauchbad 18 eingetaucht, wo ein Abtrag von Zunder und anderen Verunreinigungen unter Einwirkung von elektrischem Strom erfolgt. Alternativ kann auch ein mechanischer Reinigungsprozess verwendet werden, wie Kugelstrahlen oder Bürsten.

Nach dem Reinigen werden die Formteile 16 im Verfahrensschritt S60 mit einem Korrosionsschutz versehen. Hierfür durchlaufen die Formteile eine elektrolytische Beschichtungsanlage 20, welche mehrere Stationen umfassen kann. Zum Beschichten wird vorzugsweise ein Beschichtungsmaterial mit einem Anteil von mindestens 50 Masseprozent Zink, insbesondere mindestens 90 Masseprozent Zink, verwendet, wobei auch eine Reinzinkbeschichtung denkbar ist. Das Beschichtungsmaterial kann noch weitere Legierungselemente beinhalten.

Nach dem Beschichten können die Formteile 16 optional einem Spülen unterzogen (nicht dargestellt). Nach dem Spülen können die Formteile 16 wärmebehandelt werden (nicht dargestellt), wobei eine Wärmebehandlung auch verzichtbar ist, wenn der Gehalt an diffusiblem Wasserstoff unterhalb eines zulässigen Höchstwerts liegt. Die Wärmebehandlung kann prinzipiell auf jede technisch geeignete Weise erfolgen, beispielsweise in einer Haubenglühe oder auch durch induktive Erwärmung, um nur zwei Verfahren beispielhaft zu nennen. Die Wärmebehandlung kann bei einer Temperatur von mehr als 220°C, vorzugsweise von mehr als 230°C durchgeführt werden. Die Höchsttemperatur für die Wärmebehandlung ist vorzugsweise geringer als die AC1-Temperatur des Stahlwerkstoffs, insbesondere höchstens 600°C, vorzugsweise höchstens 400°C. Mit der Wärmebehandlung, welche auch als Effusionsglühe bezeichnet werden kann, werden Eigenspannungen im Werkstück beziehungsweise Spannungsspitzen im gehärteten Bauteil reduziert beziehungsweise die Bruchdehnung erhöht. Gleichzeitig wird durch die gewählte Temperatur die Wasserstoffeffusion beschleunigt, so dass insgesamt eine geringere Wasserstoffversprödung erreicht wird. Die Wärmebehandlung kann in einem zeitlichen Rahmen von einigen Sekunden bis zu 3 Stunden durchgeführt werden. Die Durchführung der Wärmebehandlung im Anschluss an das Beschichten beschleunigt die Trocknung der Bauteile und bei Verwendung hochfester Stähle werden durch Anlassen die Materialeigenschaften hinsichtlich Duktilität und Bruchdehnung verbessert.

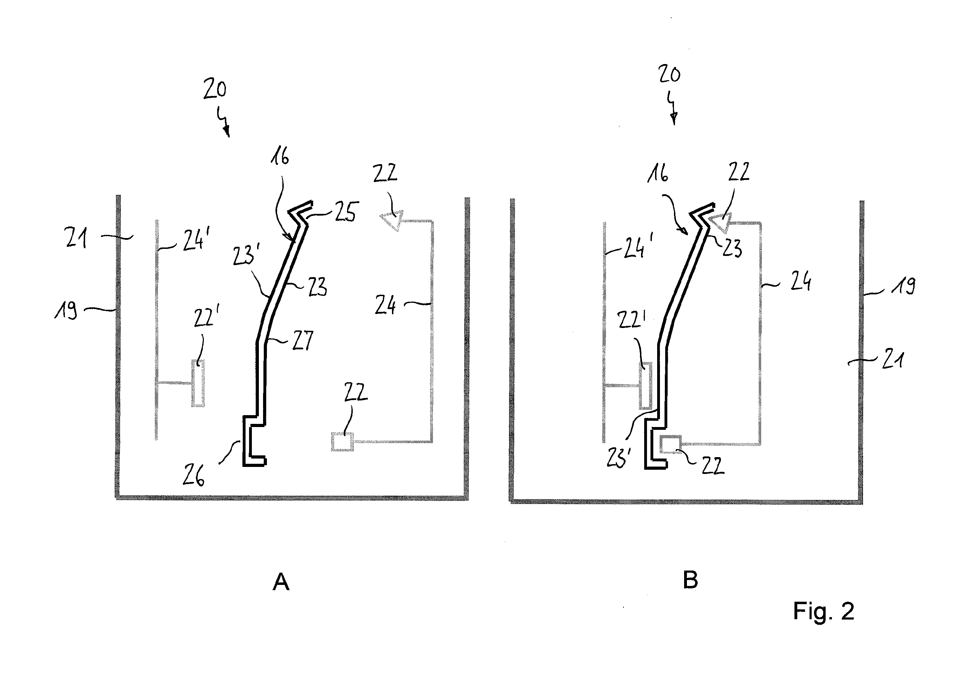

Im Folgenden wird das Beschichten gesondert anhand der Figuren 2 bis 5 beschrieben.

Das Beschichten erfolgt galvanisch mittels einer Elektrolytlösung 21, in welche die Formteile 16 eingetaucht werden. Eine entsprechende Beschichtungsvorrichtung 20 in einer ersten Ausführungsform ist in den Figuren 2A und 2B schematisch gezeigt. Es ist ein Formteil 16 erkennbar, das in ein Tauchbad aus Elektrolytlösung 21 eingetaucht wird. Das Formteil 16 kann in dem Tauchbad bewegt werden, so dass eine relative Strömung zwischen Formteil 16 und Elektrolyt erzeugt wird. Auf diese Weise wird ein gleichmäßiger Schichtaufbau erreicht und die Entstehung von Wasserstoff vermindert. In dem Tauchbad sind Anoden (nicht dargestellt) aus Beschichtungsmaterial vorgesehen, die bei Bestromung Metallionen an den Elektrolyten abgeben oder aus unlöslichem Material, wobei das Beschichtungsmaterial dann bereits im Elektrolyt enthalten ist. Die Metallionen werden auf dem Formteil 16, das als Kathode geschaltet ist, als Atome abgeschieden und bilden die Beschichtung. Die Formteile 16 können beispielsweise Strukturbauteile der Karosserie eines Kraftfahrzeugs sein, wie A-, B- oder C-Säulen oder andere Karosserieteile.

Eine Besonderheit des Beschichtens ist, dass mehrere Hilfselemente 22, 22' in dem Tauchbad verwendet werden, welche den Aufbau der Beschichtung partiell beeinflussen. Es sind vorliegend zwei Gruppen von Hilfselementen vorgesehen, nämlich erste Hilfselemente 22 für eine erste Seite 23 des Formteils 16 und ein zweites Hilfselement 22' für die zweite Seite 23' des Formteils. Die beiden ersten Hilfselemente 22 sind an einem gemeinsamen ersten Träger 24 befestigt, der in dem Elektrolyten 21 angeordnet und relativ zum Tauchbecken 19 beziehungsweise zum Formteil 16 bewegbar ist. Ein zweites Hilfselement 22' ist an einem zweiten Träger 24' befestigt, der in dem Elektrolyten 21 angeordnet und relativ zum Tauchbecken 19 beziehungsweise zum Formteil 16 bewegbar ist. Die Träger 24, 24' werden auch als Halteeinrichtung oder Positioniereinrichtung bezeichnet.

In Figur 2A ist erkennbar, dass die Träger 24, 24' und die damit verbundenen Hilfselemente 22, 22' von dem Formteil beabstandet angeordnet sind. Nach dem Eintauchen des Formteils 16 in das Tauchbecken 19 werden die Träger 24, 24' mit den daran befestigten Hilfselementen 22, 22' von der Ruheposition (Figur 2A) an das Formteil 16 in die Arbeitsposition (Figur 2B) verfahren, um dort lokal auf den Beschichtungsprozess einzuwirken. Durch die Bewegbarkeit des jeweiligen Hilfselements 22, 22' relativ zum Formteil 16 kann das Hilfselement besonders genau für den Beschichtungsprozess positioniert werden und so lokal den Schichtaufbau beeinflussen, beispielsweise fördern oder hemmen.

Zumindest einige der Hilfselemente 22, 22' können aus elektrisch leitfähigem Material bestehen, welches während des Beschichtens mit einem elektrischen Potential beaufschlagt werden. Die Hilfselemente 22 können während des Beschichtens mit unterschiedlichen elektrischen Potentialen beaufschlagt werden. Hiermit lässt sich die auf dem Formteil 16 zu erzeugende Schichtdicke individuell einstellen. Das Beschichten kann nach einer möglichen Verfahrensführung derart durchgeführt werden, dass die Elektrolytlösung in einem ersten Schritt mit gepulstem Strom beaufschlagt wird und in einem anschließenden zweiten Schritt mit ungepulstem Strom. Durch eine gepulste Bestromung wird ein nanokristalliner Schichtaufbau erreicht, so dass die Beschichtung werkstücknah eine besonders feine Körnung hat. Das Beaufschlagen mit Strom kann über separate Anoden (nicht dargestellt) und/oder über die elektrisch leitenden Hilfselemente 22, 22' erfolgen.

Es ist auch denkbar, dass auch eines oder mehrere Hilfselements 22, 22' aus nichtleitendem Material bestehen. Ein solches nicht-leitendes Hilfselement 22, 22' wird für den Beschichtungsprozess insbesondere derart in dem Tauchbad angeordnet, dass der Schichtaufbau partiell gehemmt wird.

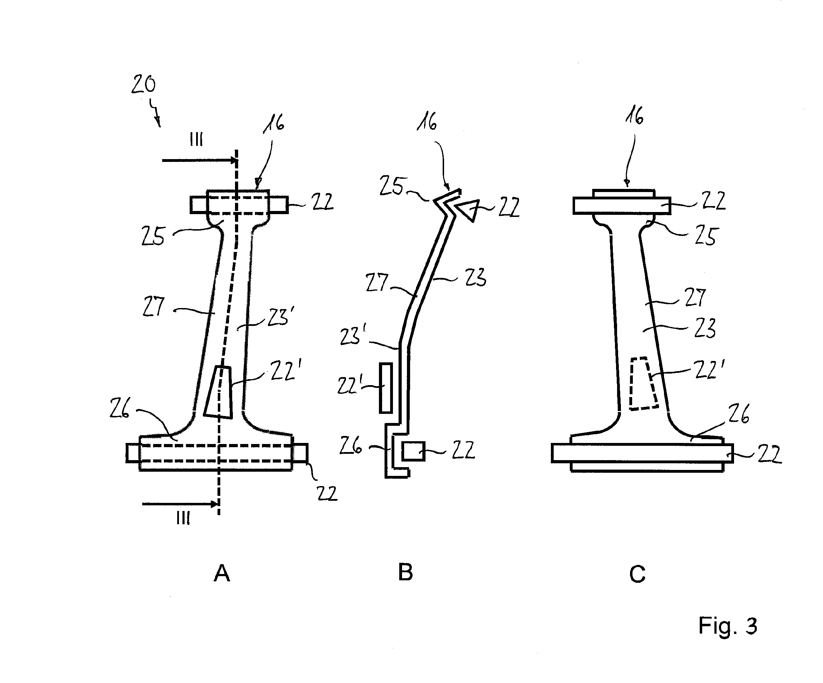

In den Figuren 3A bis 3C sind weitere Details eines beispielhaften Formteils 16 mit Hilfselementen 22, 22' erkennbar. Die Hilfselemente 22 erstrecken sich quer zu einem oberen und unteren Abschnitt 24, 25 des Formteils 16, das vorliegend in Form einer B-Säule für ein Kraftfahrzeug gestaltet ist. Es ist erkennbar, dass das obere Hilfselement 22 einen etwa dreieckigen Querschnitt aufweist und an eine entsprechende Kontur des oberen Abschnitts 24 des Formteils 16 angepasst ist. Das untere Hilfselement 22 hat einen etwa rechteckigen Querschnitt und ist an die U-förmige Kontur des unteren Abschnitts 25 des Formteils 16 angepasst. Auf der entgegengesetzten Seite 23' ist in einem unteren Bereich des Zwischenabschnitts 26 das Hilfselement 22' vorgesehen, dass in Draufsicht betrachtet innerhalb der Außenkontur des Formschnitts 16 angeordnet ist.

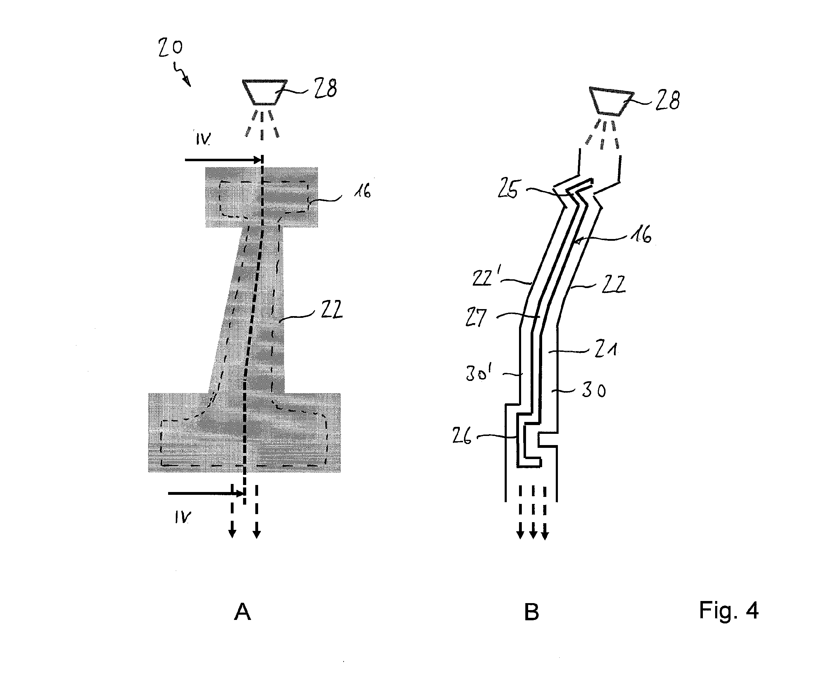

Die Figuren 4A und 4B zeigen eine erfindungsgemäße Beschichtungsvorrichtung 20 in einer weiteren Ausführungsform. Diese entspricht weitestgehend der Ausführungsform gemäß den Figuren 2 und 3 so dass dementsprechend auf die obige Beschreibung Bezug genommen wird. Das Tauchbecken und die Träger sind der Einfachheit halber nicht dargestellt. Gleiche beziehungsweise einander entsprechende Bauteile sind mit gleichen Bezugszeichen versehen wie in den obigen Figuren.

Eine Besonderheit der vorliegenden Ausführungsform gemäß den Figuren 4A und 4B ist, dass die Hilfselemente 22, 22' sich über die gesamte Oberfläche des Formteils 16 erstrecken. Das Formteil 16 ist zwischen den beiden Hilfselementen 22, 22' angeordnet, wobei die beiden Hilfselemente einen Kanal 30, 30' bilden, durch den die Elektrolytlösung mittels einer oder mehrerer Düsen 28 hindurchgepumpt wird. Auf diese Weise werden eine das Werkstück gut umschließende Strömung und damit ein verhältnismäßig schneller Schichtaufbau erreicht. Außerdem wirkt die Strömung der Bildung und dem Eintrag von Wasserstoff in das Werkstück entgegen. Im Querschnitt gemäß Figur 4B ist erkennbar, dass die Form der Hilfselemente 22, 22' an die Kontur des Formteils 16 angepasst ist. Dabei ist jeweils zwischen der Oberfläche 23, 23' des Formteils 16 und dem zugehörigen Hilfselement 22, 22' ein Spalt mit etwa konstantem Abstand entlang des Formteils 16 gebildet. Im vorliegenden Beispiel strömt der Elektrolyt 21 am oberen Abschnitt 24 ein und am unteren Abschnitt 25 wieder aus, was dort durch die Pfeile gekennzeichnet ist. Es versteht sich, dass die Hilfselemente auch eine andere Gestalt aufweisen könnte, insbesondere derart, dass sich der Spalt bereichsweise verjüngt und/oder erweitert, um in diesen Bereichen die Strömung gezielt zu beeinflussen.

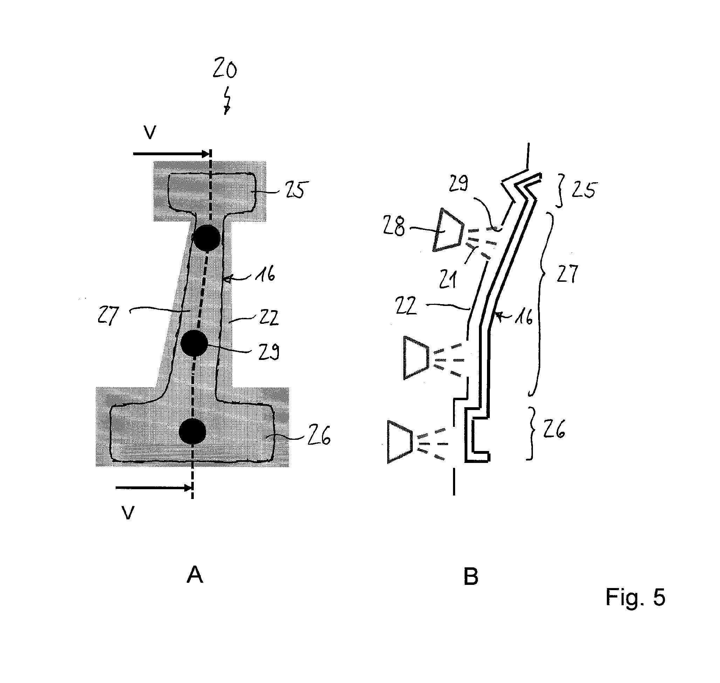

Die Figuren 5A und 5B zeigen eine erfindungsgemäße Beschichtungsvorrichtung 20 in einer weiteren Ausführungsform. Diese entspricht weitestgehend den Ausführungsformen gemäß den Figuren 2 bis 4 so dass dementsprechend auf die obige Beschreibung Bezug genommen wird. Das Tauchbecken und die Träger sind der Einfachheit halber nicht dargestellt. Gleiche beziehungsweise einander entsprechende Bauteile sind mit gleichen Bezugszeichen versehen wie in den obigen Figuren.

Eine Besonderheit der vorliegenden Ausführungsform gemäß den Figuren 5A und 5B ist, dass sich das Hilfselement 22 über die gesamte Oberfläche des Formteils 16 erstreckt. Innerhalb des Hilfselements 22 sind mehrere Durchbrüche 29 über der Erstreckung des Formteils 16 verteilt, durch die Elektrolytlösung mittels Düsen 28 partiell auf das Formteil 16 geströmt wird. Auf diese Weise wird in diesen mit den Durchbrüchen überdeckenden Bereichen ein erhöhter partieller Beschichtungsaufbau erreicht. Im Querschnitt gemäß Figur 5B ist erkennbar, dass die Form des Hilfselements 22 an die Kontur des Formteils 16 angepasst ist. Dabei ist jeweils zwischen der Oberfläche 23 des Formteils 16 und dem Hilfselement 22 ein Spalt mit etwa konstantem Abstand entlang des Formteils 16 gebildet. Im vorliegenden Beispiel ist nur auf einer Seite des Formteils ein Hilfselement 22 angeordnet, durch dessen Durchbrüche 29 Elektrolytlösung auf das Formteil 16 strömt. Es versteht sich jedoch, dass auch auf der entgegengesetzten Seite ein weiteres Hilfselement angeordnet werden könnte und/oder, dass der Spalt auch mit variablem Abstand zum Formteil gestaltet sein könnte.

Bei den vorliegenden Ausführungsbeispielen ist stets ein vollständiges Beschichten der Formteile vorgesehen. Es ist jedoch ebenso denkbar, dass nur Teilbereiche des Formteils beschichtet werden. Hiermit können der Bearbeitungsaufwand reduziert sowie ein gegebenenfalls nachfolgender Schweißprozess zum Verbinden des Formteils mit anderen Bauteilen vereinfacht werden. Ferner kann Wasserstoff in den unbeschichteten Bereichen leicht effundieren, so dass das Risiko einer Wasserstoffversprödung abnimmt. Besonders günstig ist es dabei, wenn die Formteile nur in den korrosionsgefährdeten Bereichen lokal mit dem Korrosionsschutzüberzug versehen werden. Dies sind beispielsweise Bereiche, die bei Kraftfahrzeugen vermehrt Nässe ausgesetzt sind und daher auch als Nassbereich bezeichnet werden.

Eine Besonderheit der Erfindung ist, dass das elektrolytische Beschichten nach dem Flexiblen Walzen, nach dem Ausschneiden der Platinen und nach dem Umformen erfolgt. Die auf die Formteile aufgebrachte Beschichtung ist durchgängig geschlossen beziehungsweise rissfrei und kann auf eine gleichmäßige Dicke eingestellt werden, und zwar unabhängig von der jeweiligen Dicke des Werkstücks. Auch die stärker ausgewalzten Bereiche haben eine ausreichend dicke Beschichtung, die zuverlässig vor Korrosion schützt. Durch eine vor- oder nachgeschaltete Wärmbehandlung können Eigenspannungen im Werkstück reduziert und die Wasserstoffeffusion beschleunigt werden, was ebenfalls zu einer geringeren Wasserstoffversprödung des Materials führt.

Es versteht sich, dass die erfindungsgemäße Verfahrensführung auch abgewandelt werden kann. Beispielsweise können zwischen den genannten Schritten auch hier nicht gesondert gezeigte Zwischenschritte vorgesehen sein. Beispielsweise können die Formteile vor dem elektrolytischen Beschichten mit einer Zwischenschicht versehen werden, insbesondere mit einer Nickel-, Aluminium- oder Manganschicht. Diese Zwischenschicht bildet einen zusätzlichen Schutz der Oberfläche und verbessert die Haftungsfähigkeit der anschließend aufgebrachten Zink enthaltenden Beschichtung.

### Bezugszeichenliste

- 10:
- 11: Bandmaterial
- 12: Coil
- 13: Walzen
- 14: Walzspaltregelung
- 15: Glättvorrichtung
- 16: Platine/Formteil
- 17: Umform-/Härtevorrichtung
- 18: Tauchbecken
- 19: Tauchbad
- 20: Beschichtungsvorrichtung
- 21: Elektrolytlösung
- 22, 22': Hilfselement
- 23, 23': Oberfläche
- 24, 24': Haltevorrichtung
- 25: Abschnitt
- 26: Abschnitt
- 27: Abschnitt
- 28: Strömungseinrichtung
- 29: Durchbruch
- 30, 30': Kanal

- S10: Walzen
- S20: Glätten
- S30: Vereinzeln
- S40: Unformen/Härten
- S50: Reinigen
- S60: Beschichten

## Patentansprüche

1. Verfahren zum Herstellen eines gehärteten Formteils mit den Schritten:
Erzeugen einer Platine (16) aus härtbarem Bandmaterial (11);
Erhitzen der Platine (16) auf Austenitisierungstemperatur;
Umformen und Härten der Platine zu einem gehärteten Formteil (16);
Reinigen des gehärteten Formteils (16);
Beschichten des gehärteten Formteils (16) mit einer metallischen Beschichtung in einem Tauchbad mit einer Elektrolytlösung (21),
**dadurch gekennzeichnet, dass** zumindest ein Hilfselement (22, 22') benachbart zum Formteil (16) positioniert und während des Beschichtens in dem Tauchbad verwendet wird, derart, dass der Aufbau der Beschichtung auf dem gehärteten Formteil (16) in Abhängigkeit von der Position des Hilfselements (22, 22') lokal beeinflusst wird.

2. Verfahren nach Anspruch 1,
**dadurch gekennzeichnet,**
**dass** das Beschichten derart durchgeführt, dass eine mittlere Schichtdicke von mindestens 3 µm und maximal 30 µm auf das gehärtete Formteil aufgebracht wird, wobei insbesondere vorgesehen ist, dass das Beschichtungsmaterial einen Masseanteil an Zink von mindestens 50 % aufweist.

3. Verfahren nach Anspruch 1 oder 2,
**dadurch gekennzeichnet,**
**dass** zumindest ein Hilfselement (22, 22') aus elektrisch leitfähigem Material besteht und während des Beschichtens mit einem elektrischen Potential beaufschlagt wird, wobei insbesondere mehrere Hilfselemente (22, 22') aus elektrisch leitfähigem Material vorgesehen sein können, die während des Beschichtens mit unterschiedlichen elektrischen Potentialen beaufschlagt werden.

4. Verfahren nach einem der Ansprüche 1 bis 3,
**dadurch gekennzeichnet,**
**dass** das Beschichten derart durchgeführt wird, dass die Elektrolytlösung (21) in zumindest einem Schritt mit gepulstem Strom beaufschlagt wird.

5. Verfahren nach einem der Ansprüche 1 bis 4,
**dadurch gekennzeichnet,**
**dass** zumindest eines der Hilfselemente (22, 22') aus elektrisch nicht-leitendem Material besteht und zum Beschichten derart in dem Tauchbad angeordnet wird, dass der Beschichtungsprozess lokal gehemmt wird.

6. Verfahren nach einem der Ansprüche 1 bis 5,
**dadurch gekennzeichnet,**
**dass** das zumindest eine Hilfselement (22, 22') in einer Halteeinrichtung (24, 24') aufgenommen wird, wobei die Halteeinrichtung (24, 24') in dem Tauchbad bewegbar ist.

7. Verfahren nach einem der Ansprüche 1 bis 6,
**dadurch gekennzeichnet,**
**dass** das Hilfselement (22, 22') nach dem Eintauchen des gehärteten Formteils (16) relativ zu diesem von einer Ruheposition, in der das Hilfselement von dem Formteil (16) beabstandet ist, in eine Behandlungsposition, in der das Hilfselement (22, 22') an das Formteil (16) angenähert ist, bewegt wird.

8. Verfahren nach einem der Ansprüche 1 bis 7,
**dadurch gekennzeichnet,**
**dass** während des Beschichtens eine relative Strömung zwischen dem gehärteten Formteil (16) und der Elektrolytlösung (21) erzeugt wird.

9. Verfahren nach einem der Ansprüche 1 bis 8,
**dadurch gekennzeichnet,**
**dass** das gehärtete Bauteil maximal 20 Minuten, insbesondere maximal 15 Minuten, bevorzugt maximal 10 Minuten beschichtet wird.

10. Verfahren nach einem der Ansprüche 1 bis 9,
**dadurch gekennzeichnet,**
**dass** die Platine (16) derart erzeugt wird, dass Abschnitte mit unterschiedlichen Dicken gebildet werden, wobei die Abschnitte mit unterschiedlichen Dicken durch Flexibles Walzen des Bandmaterials und anschließendes Herausarbeiten der Platine aus dem flexibel gewalzten Bandmaterial erfolgt, oder durch Verbinden einer ersten Teilplatine mit einer ersten Dicke und zweiten Teilplatine mit einer von der ersten Dicke abweichenden zweiten Dicke.

11. Verfahren nach einem der Ansprüche 1 bis 10,
**dadurch gekennzeichnet,**
**dass** die Verfahrensschritte derart durchgeführt werden, dass nach dem Beschichten eine Menge von maximal 0,7 ppm diffusiblem Wasserstoff in dem Formteil (16) enthalten ist, wobei das Reinigen des Formteils (16) insbesondere durch anodisches Beizen, Strahlen oder Bürsten erfolgt.

12. Anlage zum Herstellen eines gehärteten Formteils, umfassend:
eine Walzvorrichtung (13) zum Walzen von härtbarem Bandmaterial;
eine Schneidvorrichtung zum Erzeugen einer Platine (16) aus dem Bandmaterial;
eine Wärmebehandlungsvorrichtung zum Erhitzen der Platine auf Austenitisierungstemperatur;
eine Umform- und Härtevorrichtung (17) zum Umformen und Härten der Platine zu einem gehärteten Formteil;
eine Reinigungsvorrichtung (18) zum Reinigen des gehärteten Formteils;
eine Beschichtungsvorrichtung (20) zum Beschichten des gehärteten Formteils mit einer metallischen Beschichtung,
**dadurch gekennzeichnet, dass** die Beschichtungsvorrichtung (20) ein Tauchbad mit einer Elektrolytlösung (21) und zumindest ein Hilfselement (22, 22') in dem Tauchbad aufweist, welches derart gestaltet und von einer vom Formteil (16) beabstandeten in eine an das Formteil (16) angenäherte Position derart bewegbar ist, dass es den Aufbau der Beschichtung auf dem gehärteten Formteil (16) in der angenäherten Position lokal beeinflusst.

13. Anlage nach Anspruch 12,
**dadurch gekennzeichnet,**
**dass** das zumindest eine Hilfselement (22, 22')zumindest eines von inert, nichtlöslich, unbeschichtbar und formstabil ist.

14. Anlage nach Anspruch 12 oder 13,
**dadurch gekennzeichnet,**
**dass** die Beschichtungsvorrichtung (20) eine Halteeinrichtung (24, 24') aufweist, an der das Hilfselement (22, 22') befestigt ist, wobei die Halteeinrichtung (24, 24') im Tauchbad relativ zum gehärteten Formteil (16) bewegbar ist.

15. Anlage nach einem der Ansprüche 12 bis 14,
**dadurch gekennzeichnet,**
**dass** zumindest ein Hilfselement (22) einen Durchbruch (29) aufweist, durch den der Elektrolyt gezielt auf einen Teilbereich des Formteils (16) strömen kann.

16. Anlage nach einem der Ansprüche 12 bis 15,
**dadurch gekennzeichnet,**
**dass** die Beschichtungsvorrichtung (20) eine Strömungseinrichtung (28) aufweist, welche eine relative Strömung zwischen der Elektrolytlösung und dem gehärteten Formteil (16) erzeugt, wobei die Strömungseinrichtung (28) insbesondere zumindest eine Düse aufweist, mittels welcher der Elektrolyt gezielt auf einen Teilbereich des Formteils (16) gerichtet werden kann.
